# EUROPEAN PATENT APPLICATION

(11) **EP 2 383 206 A1**
(43) Date of publication of application: **02.11.2011**
(21) Application number: 10161345.3
(22) Date of filing: 28.04.2010
(51) Int. Cl.: B65D 88/12, B65D 90/00, B60J 5/04, B65D 90/66

(54) **Container or vehicle body and a drive unit for its side door**

(71) Applicant: Hyva International B.V., 2400 AH Alphen aan de Rijn (NL)
(72) Inventor: Wassenaar, Hendrik, 2401 DM Alphen a/d Rijn (NL)
(74) Representative: Uittenbogaart, Gustaaf Adolf

(57) **Abstract**

The invention concerns a container or vehicle body comprising a side door (3,6) for closing a side opening, a hinge for connecting an upper rim (17) of the side door to an upper frame (21) of the side opening and a drive means (12) for opening the side door (3,6) from a closed position at one of the sides of the container or vehicle body to an open position above the side opening.
In accordance with the invention, the hinge comprises a link (19) pivotably connected to a first mounting bracket (20) at the side of the upper frame (21) and to a second mounting bracket (18) mounted on the top of the upper rim (17).
The invention also concerns a drive unit, comprising a drive link (24) pivotably connected to a housing (30), a connecting part (7) for coupling to the side door (3,6), a first actuator (29) for rotating the drive link (24) and a second actuator (31) for rotating the connecting part (17).

## Description

The invention concerns a container or vehicle body for transporting or storing goods in accordance with the preamble of claim 1. For safe handling of the container or vehicle body with open side door(s) one or both side door(s) must lie flat on the roof. For making this possible, in the known containers or vehicle bodies the hinge extends above the roof. Extending above the roof makes the hinge vulnerable after the side door is closed and rough handling of the containers or vehicle bodies often damages the hinges so that opening the side door or use of the side door is no longer possible. This is undesirable.

In order to improve this situation the container or vehicle body is according to claim 1. In this way with the side door closed, the hinge is below the roof so that the side of the upper frame and the top of the side door protect the hinge and damage to the hinge does not occur. Because of the double hinge the side door can move from its closed position at the side of the upper frame to the position flat on top the roof.

In accordance with an embodiment the container or vehicle body is according to claim 2. In this way, the first actuator and the second actuator of the drive unit rotate the side door in a well controlled movement from the vertical position at the side of the container to the position on the roof and vice versa.

In accordance with an embodiment the container or vehicle body is according to claim 3. In this way, the drive unit can be built in the container or vehicle body in a compact and quick way.

In accordance with an embodiment the container or vehicle body is according to claim 4. In this way, one of the actuators can move between a start and an end position against a load of constant direction and only the other actuator must be suitable for a controlled movement under load from both directions in order to control the movement of the side door.

In accordance with an embodiment the container or vehicle body is according to claim 5. In this way, the housing can be flat and has dimensions that make it possible to fit the drive unit in the roof while maintaining the accessibility of the storage area in the container or vehicle body.

In accordance with an embodiment the container or vehicle body is according to claim 6. In this way, the second actuator can remain stationary during movement of the first actuator and the side door rotates only around the first rotation axis. This leads to a well-controlled movement of the side door.

In accordance with an embodiment the container or vehicle body is according to claim 7. In this way, the linear drives remain parallel for instance parallel to the roof and the height of the housing of the drive unit is only slightly more than the diameter of the linear drive so that is very compact and suitable for building in the roof.

In accordance with an embodiment the container or vehicle body is according to claim 8. In this way, each drive unit can be smaller for moving a door of specific dimensions, synchronising the movement of the drive unit reduces or prevents deformation or tension in the side door.

In accordance with an embodiment the container or vehicle body is according to claim 9. This ensures that the first actuator lifts the second rotation axis sufficiently high, for instance above the roof, before the second actuator starts and moves the side door in a horizontal position on the roof.

In accordance with an embodiment the container or vehicle body is according to claim 10. In this way, due to the high force that hydraulic cylinders can generate the drive unit can be very compact and the storage volume is hardly reduced.

In accordance with an embodiment the container or vehicle body is according to claim 11. In this way, it is easy to control the actuators.

In accordance with an embodiment the container or vehicle body is according to claim 12. In this way, the drive unit can be lighter and it is easier to put two side doors next to each other on the roof.

The invention also concerns a drive unit according to claim 13. Such a drive unit makes rotation of a connecting part over an angle of 270° from one side of the housing to an adjoining side of the housing possible.

In accordance with an embodiment, the drive unit is according to claim 14. In this way, only one actuator needs to be able to position the connecting part against loads from both sides accurately.

In accordance with an embodiment, the drive unit is according to claim 15. In this way, the drive unit contains simple linear drives for creating the complicated movement of the connecting part.

In accordance with an embodiment, the drive unit is according to claim 16. In this way, the height of the housing can be limited to the dimension of the linear drives, as they make no movement perpendicular to their longitudinal axes, so reducing it overall dimensions.

In accordance with an embodiment, the drive unit is according to claim 17. In this way, the actuators move one after the other so making a controlled movement possible.

Hereafter follows a description of embodiments of the invention with the aid of drawings. In the drawings
Figure 1 shows a cross section near a longitudinal end wall of a container with closed side doors,
Figure 2 shows a cross section halfway the container of a hinge that connects the side door to an upper frame of an opening in the longitudinal side of the container,
Figure 3 shows a cross section of the container as shown in figure 1 with open side doors lifted above the upper frame of the opening in the longitudinal side of the container,
Figure 4 shows a cross section of the container as shown in figure 1 with the open side doors on the roof of the container,
Figure 5 shows a top view of a drive unit for the doors of the containers with the doors in the position of figure 1,
Figure 6 shows a cross section VI-VI of the drive unit of figure 5,
Figure 7 shows a cross section VII-VII of the drive unit of figure 5,
Figure 8 shows the top view of a drive unit for the doors of the containers with the doors in the position of figure 3,
Figure 9 shows a cross section IX-IX of the drive unit of figure 8,
Figure 10 shows cross section X-X of the drive unit of figure 8,
Figure 11 shows the top view of a drive unit for the doors of the containers with the doors in the position of figure 4,
Figure 12 shows a cross section XII-XII of the drive unit of figure 11, and
Figure 13 shows cross section XIII-XIII of the drive unit of figure 11.

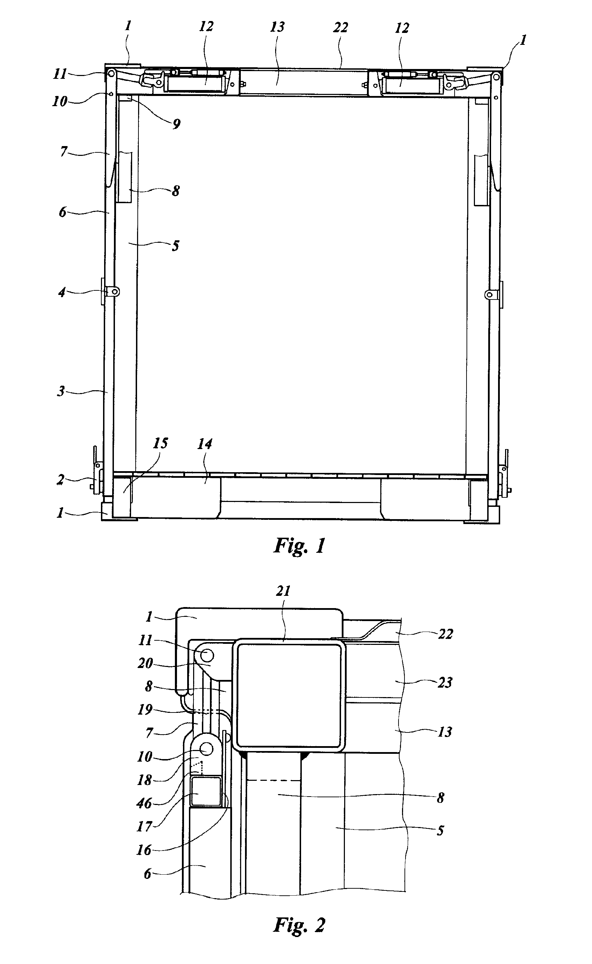

Figure 1 shows a cross section of a container used for sea transport of goods in ocean-going vessels and for land transport of the goods to and from the harbours. For hoisting and fastening the container on the vessel, all eight corners of the container have a corner casting 1 that has standardized dimensions. Floor girders 15 at both sides of the floor 14 are between the corner castings 1 in the longitudinal direction of the floor 14 and form the longitudinal sides of the floor 14. The floor girders 15 support transverse girders, the transverse girders support the floor planks that support the goods loaded in the container.

Four vertical posts 5 mounted on the corner castings 1 at the four corners of the floor 14 support the corner castings 1 of a roof 22 of the container. End girders 13 connect the corner castings 1 on top of the vertical posts 5 at the end of the container in transverse direction and upper frames 21 (see figure 2) form the longitudinal sides of the roof 22. A support 9 connects the upper frame 21 to the vertical post 5 and supports a drive unit 12 that is mounted against the end girder 13, there is a drive unit 12 at both ends of the container. A brace 8 between the vertical posts 5 and the support 9 or the upper frame 21 strengthens the connection between the vertical post 5 and the upper frame 21.

An upper door-section 6 and a lower door-section 3 connected by a horizontal hinge 4 close the longitudinal sides of the container. The drive unit 12 rotates the upper door-section 6 upwards to open the longitudinal side of the container and further rotation folds the upper door-section 6 and the lower door-section 3 until they rest on the roof 22. For this the drive unit 12 rotates the connecting part 7, that is connected to or part of the upper door-section 6, around the first rotation axis 11 and the second rotation axis 10. The lower door-section 3 has a latch 2 for closing the lower door-section 3 against the floor girder 15.

Figure 2 shows the hinge between the upper door-section 6 and the upper frame 21. The upper door-section 6 has a doorframe 17 that forms the upper rim of the upper door-section 6. The upper door-section 6 may comprise a wall of thin plate welded against the doorframe 17. At a distance of approximately 700 mm a number of first mounting brackets 20 are welded against the upper frame 21 and corresponding second mounting brackets 18 are welded on the doorframe 17. A link 19 can rotate around a first rotation axis 11 over approximately 135° in the first mounting bracket 20 and around a second rotation axis 10 in the second mounting bracket 18 over approximately 135°. For limiting this rotation, the first mounting bracket 20 has a notch 46 and the second mounting bracket 18 might have limiting pins or notches. In this way, the upper door-section 6 can first rotate over 135° from the side of the container to a position extending upwards and on further rotation it also moves upwards and rotates further over 135° till it rests on the roof 22 of the container. Roof girders 23 connect the two upper frames 21 and support to the roof 22. The use of the two rotation axes 10, 11 makes it possible to position the doors on the roof 22 while the doors remain free of the upper frame 21 during rotation from the side of the container to above the roof 22.

The doorframe 17 has a door seal 16, that rotates with the upper door-section 6 and that seals against the upper frame 21, for preventing water or other materials to enter into the container. The sides of the upper door-section 6 and the lower door-section 3, the hinge 4 and the bottom rim of the lower door-section 3 will have rubber seals as well for obtaining a watertight space inside the container.

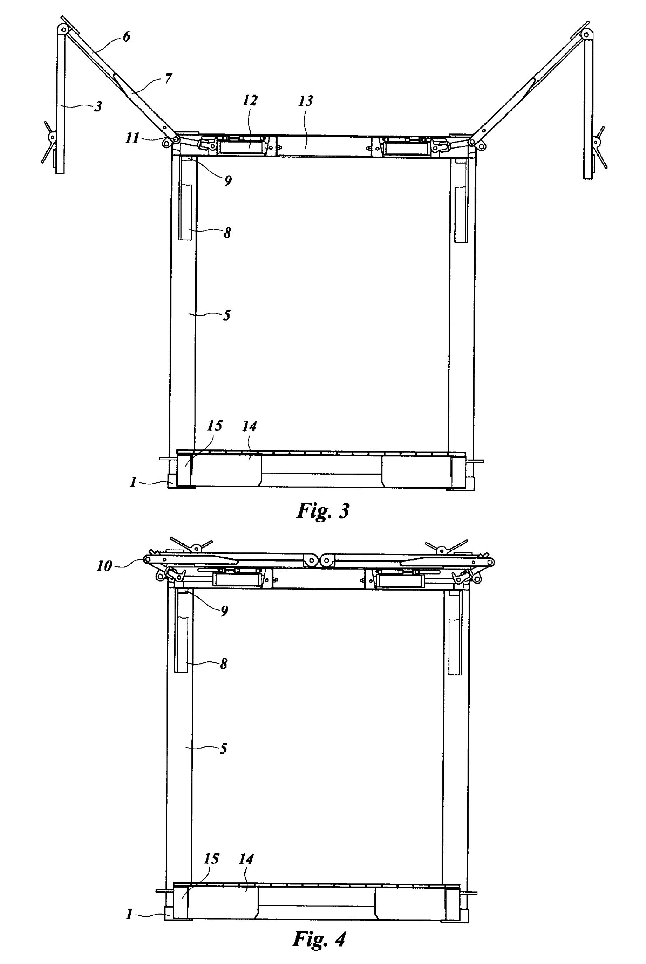

Figure 3 shows a cross section of the container at the location of the drive unit 12 after the drive unit 12 rotated the upper door-sections 6 around the first rotation axis 11 over 135°. Figure 4 shows a cross section of the container after the drive unit 12 has rotated the upper door-sections 6 around the second rotation axis 10 over 135° and the door-sections 3, 6 rest on the roof 22. The storage space on the floor 14 is now freely accessible from the sides of the container, so that loading and unloading is possible using a forklift trucks without that the side doors hinder in anyway.

The construction of the side door and the opening of the side door by rotating the side door onto the roof as described for containers can be used in the similar way for vehicle bodies, such as trailers and other mobile storage units. The folding of the side doors on the roof makes the loading space accessible for loading of pallets with forklift trucks. After the side doors are closed, the loading space in the trailer provides a safe storage area during transport and/or storage of goods.

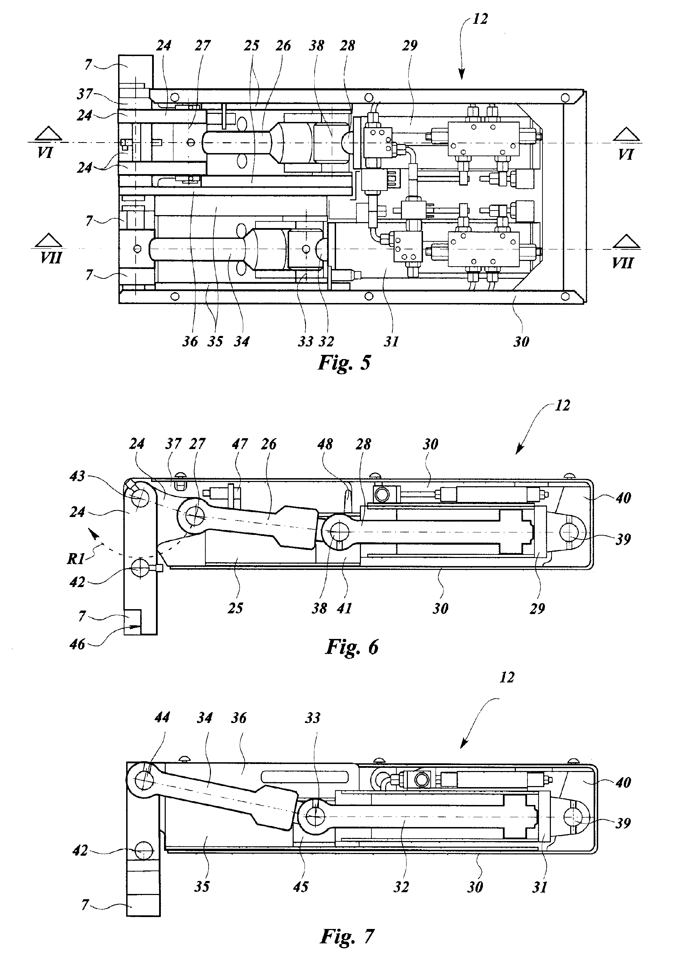

Figures 5, 6 and 7 show the drive unit 12 with the connecting part 7. The connecting part 7 is part of or can be coupled to the upper door-section 6 of the container; the figures of the drive unit 12 do not show the door-section 6. The drive unit 12 has a housing 30 that encloses the various parts used for rotating the connecting part 7; the housing is mounted in the roof 22 of the container. The housing 30 has brackets 37 in which a housing pivot axis 43 is mounted around which a drive link 24 can pivot. When mounted in the container the centreline of the housing pivot axis 43 is in line with the first rotation axis 11.

A first cylinder 29 has a first piston rod 28. A pivot axis 38 couples the first piston rod 28 and a first connection rod 26. A pivot axis 27 couples the other end of the first connection rod 26 to the drive link 24. A first slide 41 can move in rails 25 so that a line connecting a centreline of the pivot axis 27 and a centreline of the pivot axis 38 makes an angle with the line connecting the centreline of the pivot axis 27 and a centreline of the housing pivot axis 43. The angle between these two lines increases as the first cylinder 29 moves the first piston rod 28 and the first piston rod 28 moves the slide 41 along the rails 25 so that the drive link 24 rotates around the housing pivot axis 43 in a first rotation direction R1.

A second cylinder 31 has a second piston rod 32. A pivot axis 33 couples the second piston rod 32 and a second connection rod 34. A tilt pivot axis 44 couples the other end of the second connection rod 34 to the connecting piece 7. A second slide 45 can move in rails 35 and guides the pivot axis 38 so that during axial movement of the second piston rod 32 the second cylinder 31 makes no sideways movements. In the position where the door-section 6 is closed and/or the connection piece 7 is vertical, the second piston rod 32 does not extend from the second cylinder 31. In that position a centreline of the tilt pivot axis 44 is in line with a centreline of the housing pivot axis 43. This ensures that when the connection piece 7 rotates together with the drive link 24 around the common rotation axis in the first rotation direction R1 the location of the centreline of the tilt pivot axis 44 does not change and the position of the second piston rod 32 in the second cylinder 31 does not change.

The connecting piece 7 can rotate relative the drive link 24 around a connection pivot axis 42. A notch 46 limits the rotation around the connection pivot axis 42 so that the connection piece 7 rotates with the drive link 24 when the drive link 24 rotates in the first rotation direction R1. The distance between the centrelines of the housing pivot axis 43 and the connection pivot axis 42 is equal to the distance between the first rotation axis 11 and the second rotation axis 10.

A ridge 36 supports the rails 25 and rails 35 and a pin 39 couples the first cylinder 25 and the second cylinder 35 to one or more brackets 40 are part of the housing 30. For activating the first cylinder 25 and the second cylinder 35 there is a control system (not shown) that controls the flow of pressurized hydraulic fluid such as oil to the cylinders 25, 35. The control system comprises valves, flow regulators, electric and/or manual pumps, accumulators and/or a control panel for setting the valves.

The control system can be a very simple embodiment with a manual pump for opening and controlling the movement of either one or the other side door or a pump for each door. Such a simple system might include an automatic hydraulic circuit for sequential movement of the second cylinder 35 after opening the side door with the first cylinder 25 and vice versa when closing the side door. In an embodiment where one side door has two or more drive units 12, the automatic hydraulic circuit ensures that first all first cylinders 25 have finished the opening before the movement of the second cylinders 35 can start. For closing the side doors, the automatic hydraulic circuit functions accordingly.

A more complicated embodiment includes electric pumps for generating pressurized hydraulic fluid for moving the side doors. In addition or alternatively, there can be a high-pressure and a low-pressure connection for an external supply of pressurized hydraulic fluid. The container can also have accumulators that store sufficiently pressurized hydraulic fluid over a long time for opening and closing the side doors several or many times. In a further embodiment, the control system might include valves that are electrically controlled and there might be a control panel for an operator to start opening and/or closing the side doors automatically. The hydraulic systems will include all required safety devices in order to prevent overload and/or damage of the components and to prevent spillage of hydraulic fluid.

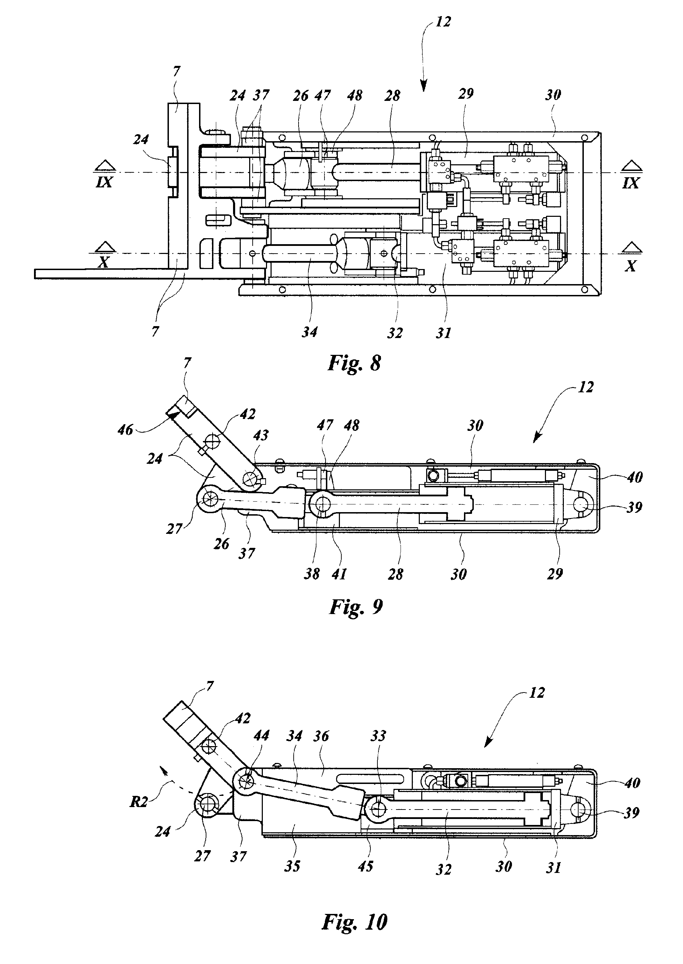

Figures 8, 9 and 10 show the drive unit 12 in the situation where the control system has activated the first cylinder 29 and the first piston rod 28 now extends from the first cylinder 29. The second piston rod 32 remains retracted in the second cylinder 31 and the centreline of the tilt pivot axis 44 remains in line with the centreline of the housing pivot axis 43. The first piston rod 28 has a notch 48 that contacts an end switch 47 connected to the control system and the control system stopped the movement of the first piston rod 28 after the drive link 24 and with that the connecting part 7 rotated over an angle of 135°. The drive unit 12 shown in figures 8-10 is in similar position as shown in figure 3.

After rotation the centreline of the connection pivot axis 42 is above the centreline of the second connection rod 34, activation of the second cylinder 31 will rotate the connecting part 7 in a second rotation R2 around the connection pivot axis 42. During this rotation, the centre of gravity of the side door moves from one side of the connection pivot axis 42 to its other side, so that the force in the second connection rod 34 and the second piston rod 32 changes direction during the movement of the second piston rod 32. In order to ensure a smooth movement of the side door the second cylinder 31 and its control valves have features that ensure approximately constant movement of the second piston rod 32 in the second cylinder 32 during this change in direction of the load.

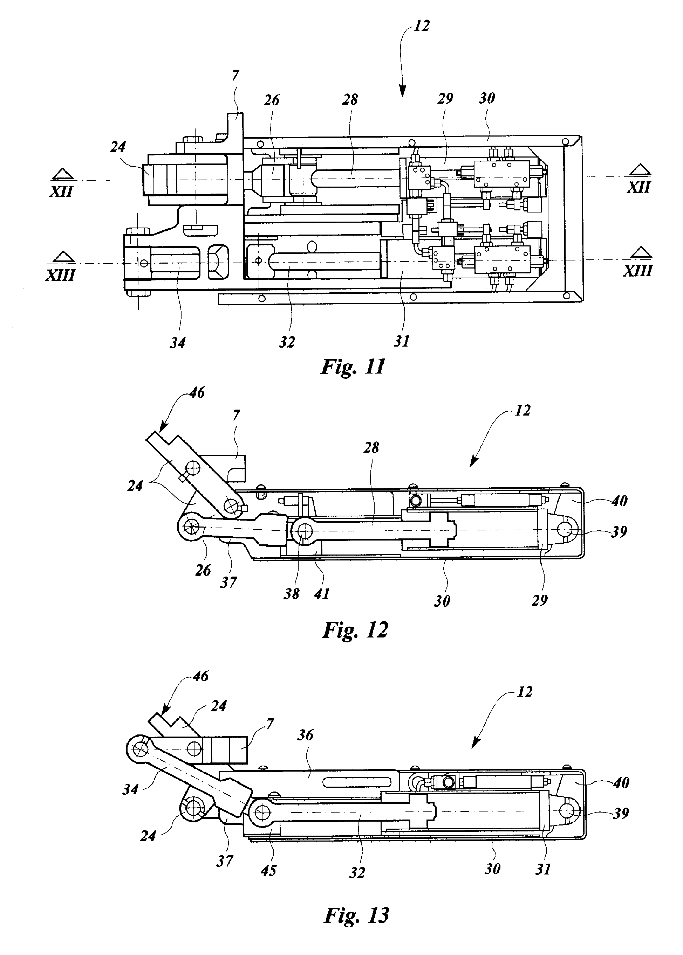

Figures 11, 12 and 13 show the drive unit 12 in the situation after the control system activated the second cylinder 31 after the activation of the first cylinder 29. The connecting part 7 rotated first with the drive link 24 over 135°, see figures 8-10, and now a further 135° so that the side door 3,6 is on the roof 22 as shown in figure 4.

For closing the side door 3,6 the second cylinder 31 retracts the second piston rod 32 and after that the first cylinder 29 retracts the first piston rod 28 so that the connecting part 7 rotates downward and the side door 3,6 is again in the vertical position and can be closed with the latch 2.

In the shown embodiment, hydraulic cylinders 29 and 31 rotate the drive link 24 and the connecting part 7. In other embodiments, there can be other types of linear drives such as spindle drives driven by an electric motor. In other embodiments instead of linear drives there can be rotating drives for rotating the drive link 24 and the connecting part 7.

## Claims

1. Container or vehicle body for transporting or storing goods comprising a floor (14), a roof (22) and in the corners of the roof and the floor vertical posts (5) for connecting the floor and the roof, a longitudinal side with a side opening, a side door (3,6) for closing the side opening, a hinge for connecting an upper rim (17) of the side door to an upper frame (21) of the side opening and a drive means (12) for opening the side door from a closed position at one of the sides of the container or vehicle body to an open position above the side opening **characterized in that** the hinge comprises a first mounting bracket (20) mounted at the side of the upper frame (21), a link (19) pivotably connected to the first mounting bracket with a first rotation axis (11), and a second mounting bracket (18) mounted on the top of the upper rim (17) pivotably connected to the link with a second rotation axis (10).

2. Container or vehicle body in accordance with claim 1 wherein the drive means comprises a drive unit (12) with a housing (30), a drive link (24) pivotably connected to the housing with a centerline (43) in line with the first rotation axis (11), a connecting part (7) connectable to the top of the side door (6) and pivotably connected to the drive link with a centreline (42) in line with the second rotation axis (10), a first actuator (28,29) for rotating the drive link relative to the housing and a second actuator (31,32) for rotating the connecting part relative to the drive link.

3. Container or vehicle body in accordance with claim 2 wherein the first actuator (28,29) and the second actuator (31,32) are mounted in the housing (30).

4. Container or vehicle body in accordance with claim 2 or 3 wherein the first actuator (28,29) or the second actuator (31,32) rotates the side door (3,6) from a vertical position over a first angle that is less than 180 degrees and the other actuator rotates the side door over a second angle till a rotation of approximately 270 degrees and wherein the other actuator can move the side door against a load in both directions at an approximately constant speed.

5. Container or vehicle body in accordance with claim 2, 3 or 4 wherein the first actuator (28,29) comprises a linear drive and a first connecting rod (26) coupled to the drive link (24) and the second actuator (31,32) comprises a linear drive and a second connecting rod (34) coupled to the connecting part (7).

6. Container or vehicle body in accordance with claim 5 wherein during rotation over the first angle the second actuator (31,32) keeps the centerline of the pivot connecting the second connecting rod (34) to the connecting part (7) is in line with the first rotation axis (11).

7. Container or vehicle body in accordance with claim 5 or 6 wherein one or both linear actuators(s) (29,31) drive(s) a slide (41,45) and the connecting rod(s) (26, 34) is/are pivotably connected to the slide (s) .

8. Container or vehicle body in accordance with one of the claims 2-7 wherein the side door (3,6) has two or more drive units (12) and synchronizing means (47,48) for synchronizing the movements of the first actuator(29) and second actuator (31) in all drive units.

9. Container or vehicle body in accordance with one of the claims 4-8 wherein all actuators (29) that rotate the side door (6) over the first angle activate a limit switch (47) at an identical angle and control means prevent starting of the actuators that rotate the side door (6) over the further angle until all limit switches are activated.

10. Container or vehicle body in accordance with one of claims 2-9 wherein linear actuators are hydraulic cylinders (29,31) mounted parallel to the roof (22).

11. Container or vehicle body in accordance with one of the claims 2-9 wherein the linear actuators comprise spindles mounted parallel to the roof and driven by electric motors.

12. Container or vehicle body in accordance with one of the previous claims wherein the side door comprises two parts (3,6) coupled by a horizontal hinge (4).

13. Drive unit for opening and closing a side door (3,6) of a container or vehicle body, comprising a housing (30), a drive link (24) pivotably connected to the housing, a connecting part (7) for coupling to the side door and pivotably connected to the drive link, a first actuator (29) for rotating the drive link relative to the housing and a second actuator (31) for rotating the connecting part relative to the drive link.

14. Drive unit according to claim 13 wherein one actuator (29) rotates the connecting part (7) over a first angle that is less than 180 degrees and the other actuator (31) rotates the connecting part over a second angle till the maximum rotation of approximately 270 degrees and wherein the other actuator can move the connecting part against a load in both directions at an approximately constant speed.

15. Drive unit according to claim 13 or 14 wherein the first actuator (29) comprises a linear drive and a first connecting rod (26) coupled to the drive link (24) and the second actuator (31) comprises a linear drive and a second connecting rod (34) coupled to a the connecting part (7).

16. Drive unit according to claim 13, 14 or 15 wherein one or both linear actuators(s) (29,31) drive(s) a slide (41,45) and the connecting rod(s) (26,34) is/are pivotably connected to the slide(s).

17. Drive unit according to one of the claims 14-16 wherein the actuator (29) that rotates the connecting part (7) over the first angle has a limit switch (47) activated at the first angle and control means prevent starting of the actuator (31) that rotates the connecting part over the second angle until the limit switch is activated.
